# EUROPÄISCHE PATENTSCHRIFT

(11) **EP 1 570 161 B1**
(45) Veröffentlichungstag und Bekanntmachung des Hinweises auf die Patenterteilung: **10.01.2007**
(21) Anmeldenummer: 03795838.6
(22) Anmeldetag: 22.11.2003
(51) Int. Cl.: F02B 37/18, F02M 25/07, F16K 11/052

(54) **BRENNKRAFTMASCHINE MIT EINEM ABGASTURBOLADER**
INTERNAL COMBUSTION ENGINE COMPRISING AN EXHAUST GAS TURBOCHARGER
MOTEUR A COMBUSTION INTERNE A TURBOCOMPRESSEUR A GAZ D'ECHAPPEMENT

(30) Priorität: 12.12.2002 DE 10258022
(43) Veröffentlichungstag der Anmeldung: 07.09.2005
(73) Patentinhaber: DaimlerChrysler AG, 70567 Stuttgart (DE)
(72) Erfinder: FINGER, Helmut, 70771 Leinfelden-Echterdingen (DE); SCHMIDT, Erwin, 73666 Baltmannsweiler (DE); SUMSER, Siegfried, 70327 Stuttgart (DE)
(86) Internationale Anmeldenummer: PCT/EP2003/013138
(87) Internationale Veröffentlichungsnummer: WO 2004/053310

(56) Entgegenhaltungen:
- EP-A- 0 401 615
- WO-A-01/09487
- DE-A- 19 618 160
- US-A- 5 867 987
- US-B1- 6 223 534

## Beschreibung

Die Erfindung bezieht sich auf eine Brennkraftmaschine mit einem Abgasturbolader nach dem Oberbegriff des Anspruches 1.

In der Druckschrift DE 198 57 234 C2 wird eine derartige aufgeladene Brennkraftmaschine beschrieben, deren Abgasturbine einen geteilten Spiralkanal mit zwei separaten Abgasfluten aufweist, wobei jede Abgasflut über je eine Abgasleitung des Abgasstranges mit Abgasen aus jeweils einer Zylinderbank der Brennkraftmaschine versorgt wird. Die beiden Abgasleitungen sind über eine Ventileinrichtung miteinander verbunden, wodurch ein Umblasen von Abgas zwischen den beiden Abgasleitungen ermöglicht wird. Darüber hinaus ist ein die Abgasturbine überbrückender Bypass vorgesehen, welcher ebenfalls von der Ventileinrichtung zu öffnen und zu schließen ist.

Ein Umblasen von Abgas zwischen den beiden Abgasleitungen erfolgt insbesondere in der befeuerten Betriebsweise der Brennkraftmaschine, um einen Druckausgleich bzw. eine Druckbegrenzung in den Abgasleitungen zu erreichen. Die beiden Abgasfluten in der Abgasturbine weisen ein unterschiedlich großes Aufnahmevolumen auf, wobei in der der kleineren Abgasflut zugeordneten Abgasleitung ein höherer Staudruck zu erreichen ist als in der Abgasleitung für die größere Abgasflut. Dieser höhere Staudruck kann für eine Abgasrückführeinrichtung vorteilhaft ausgenutzt werden, welche eine Rückführleitung zwischen der Abgasleitung der kleineren Abgasflut und dem Ansaugtrakt sowie ein in der Rückführleitung angeordnetes Rückführventil umfasst. Hierbei ist jedoch zu beachten, dass insbesondere in hohen Motordrehzahlbereichen die Menge rückgeführten Abgases begrenzt werden muss, was über die Umblasung von Abgas zwischen den beiden Abgasleitungen durchgeführt werden kann.

Der die Abgasturbine überbrückende Bypass wird dagegen vorteilhaft im Motorbremsbetrieb geöffnet, um den Turbineneintrittsdruck des Abgases und damit auch die gewünschte Motorbremsleistung einstellen zu können.

Die Druckschrift DE 196 18 160 C2 offenbart eine Brennkraftmaschine mit einem Abgasturbolader, deren Abgasturbine zwei Abgasfluten aufweist, die dem Turbinenrad vorgelagert sind. Die beiden Abgasfluten werden über jeweils eine Abgasleitung von den Zylinderauslässen der Brennkraftmaschine mit Abgas versorgt, wobei von der die kleinere Abgasflut versorgenden Abgasleitung eine Rückführleitung einer Abgasrückführungseinrichtung abzweigt, über die in bestimmten Betriebszuständen der Brennkraftmaschine Abgas aus dem Abgasstrang in den Ansaugtrakt rückgeführt wird. Die beiden Abgasfluten sind im Gehäuse der Turbine stromauf des Turbinenrades über eine Trennwand separiert, in die eine Ventileinrichtung integriert ist, über die die beiden Abgasfluten jeweils mit einem das Turbinenrad überbrückenden Bypass verbunden werden können. Auf diese Weise kann das Abgas unter Umgehung des Turbinenrades abgeblasen werden.

Die Ventileinrichtung ist als Drehschieber mit einem zylindrischen Ventilkörper ausgeführt, in dessen Ventilkörpermantel in Achsrichtung verlaufende Kommunikationsöffnungen eingebracht sind, welche zwischen einer mit den Abgasfluten kommunizierenden Öffnungsstellung und einer Schließstellung zu verstellen sind. Durch Drehung des Ventilkörpers kann entweder eine Abblasung eingestellt werden, bei der der Gasinhalt in den beiden Abgasfluten über den Bypass geleitet wird, oder eine Trennung beider Fluten erreicht werden, bei der eine Abblasung verhindert ist und der Gasinhalt über den Turbineneintrittsquerschnitt abströmen muss.

Dagegen ist es mit der in der DE 196 18 160 C2 gezeigten Konfiguration nicht möglich, einen Druckausgleich zwischen den beiden Abgasleitungen bzw. den beiden Abgasfluten herzustellen. Es existiert keine Position des Ventilkörpers mit den beiden gegenüberliegenden, in Achsrichtung verlaufenden Kommunikationsöffnungen, in der nur ein Umblasen und kein Abblasen möglich ist.

Die Druckschrift US 6 223 534 B1 offenbart eine Motorbremseinrichtung für eine Brennkraftmaschine mit einem Abgasturbolader, dessen Abgasturbine ebenfalls zweiflutig ausgebildet und über eine Ventileinrichtung mit einem Bypass zu verbinden ist. Die Ventileinrichtung umfasst einen hohlzylindrischen Ventilkörper mit Kommunikationsöffnungen, die in einer Öffnungsposition des Ventilkörpers die Abgasfluten mit dem Bypass verbinden.

Auch beim Gegenstand der US 6 223 534 B1 ist aber nur entweder ein Abblasen des Inhaltes beider Abgasfluten über den Bypass oder ein Sperren der Ventileinrichtung möglich, bei der ein Abblasen verhindert ist und der Abgasinhalt beider Abgasfluten den Weg über das Turbinenrad nehmen muss. Weitere Stellmöglichkeiten, insbesondere ein Umblasen zwischen den beiden Abgasfluten, sind nicht vorgesehen.

Von diesem Stand der Technik ausgehend liegt der Erfindung das Problem zugrunde, eine aufgeladene Brennkraftmaschine, deren Abgasturbine zweiflutig ausgebildet ist, mit einfachen konstruktiven Mitteln in der Weise auszubilden, dass in Abhängigkeit des aktuellen Betriebszustandes der Brennkraftmaschine sowohl ein Umblasen zwischen den Abgasleitungen der beiden Abgasfluten als auch ein Abblasen durch einen die Abgasturbine überbrückenden Bypass möglich ist.

Dieses Problem wird erfindungsgemäß mit den Merkmalen des unabhängigen Anspruches 1 gelöst. Die abhängigen Ansprüche geben zweckmäßige Weiterbildungen an.

Bei der erfindungsgemäßen Brennkraftmaschine ist die zwischen den beiden Abgasleitungen angeordnete Ventileinrichtung als Drehschieber ausgeführt und umfasst einen drehbar gelagerten und hohlzylindrisch ausgebildeten Ventilkörper. In den Mantel des Ventilkörpers ist mindestens eine Kommunikationsöffnung eingebracht, welche die Außenseite des Ventilkörpers mit dem Ventilkörperinnenraum verbindet. Der Ventilkörper ist zwischen verschiedenen Positionen zu verdrehen, wobei in Öffnungsposition zwei Abströmöffnungen, die jeweils den beiden Abgasleitungen zugeordnet sind, in Überdeckung mit der Kommunikationsöffnung im Ventilkörper stehen, so dass die beiden Abgasleitungen miteinander verbunden sind und ein Druckausgleich durchgeführt werden kann.

Der die Abgasturbine überbrückende Bypass ist axial mit dem Ventilkörperinnenraum verbunden und über ein zusätzliches, einstellbares Bypassventil zu öffnen bzw. abzusperren. Bei geschlossenem Bypassventil ist ein Abblasen über den Bypass unterbunden; wird zugleich der Drehschieber in seine Öffnungsposition verstellt, wird ein Druckausgleich zwischen den den beiden Abgasfluten zugeordneten Abgasleitungen ermöglicht. Wird dagegen in geöffneter Position des Drehschiebers auch das Bypassventil geöffnet, findet ein Abblasen über den Bypass unter Umgehung der Abgasturbine statt. Hierbei wird zweckmäßig der Abgasinhalt aus beiden Abgasleitungen abgeblasen. Es kann gegebenenfalls aber auch zweckmäßig sein, für die beiden Abströmöffnungen der Abgasleitungen separat einstellbare Ventile vorzusehen.

Über die Position des Drehschiebers kann der Überdeckungsgrad zwischen der Kommunikationsöffnung im Ventilkörpermantel und den beiden Abströmöffnungen der Abgasleitungen und damit auch die Höhe des umzublasenden bzw. abzublasenden Abgasmassenstromes eingestellt werden.

In einer besonders vorteilhaften Ausführung ist das Bypassventil in die Ventileinrichtung integriert und wird insbesondere über eine Drehbewegung des Ventilkörpers betätigt. Dies wird bevorzugt dadurch realisiert, dass im Ventilkörpermantel eine wannenförmige Verbindungsausnehmung eingebracht ist, welche gegenüber dem Ventilkörperinnenraum strömungsdicht separiert ist. Diese Verbindungsausnehmung ist beispielsweise als eine dellenähnliche, gegenüber der Mantelfläche des Ventilkörpers zurückgesetzte Verbindungswanne am Ventilkörpermantel ausgeführt. Die Verbindungsausnehmung verbindet in einer ersten Öffnungsstellung der Ventileinrichtung die beiden Abströmöffnungen der Abgasleitungen, wobei aufgrund der gegenüber dem Ventilkörperinnenraum strömungsdichten Ausführung sichergestellt ist, dass nur ein Umblasen zwischen den beiden Abgasleitungen durchgeführt wird und ein Abblasen über den Bypass, der mit dem Ventilkörperinnenraum in Verbindung steht, verhindert ist. Soll das Abgas dagegen über den Bypass abgeleitet werden, so wird der Ventilkörper in seine zweite Öffnungsposition überführt, in welcher die Kommunikationsöffnung in Überdeckung mit einer oder mit beiden Abströmöffnungen steht, so dass eine Abgasleitung oder beide Abgasleitungen mit dem Ventilkörperinnenraum und damit auch mit dem Bypass verbunden sind.

Die Verbindungsausnehmung und die Kommunikationsöffnung bzw. die Kommunikationsöffnungen sind zweckmäßig an unterschiedlichen Winkelpositionen des Ventilkörpers angeordnet, so dass über eine Drehung des Ventilkörpers entweder die Verbindungsausnehmung oder die Kommunikationsöffnung in eine Verbindungsposition mit den Abströmöffnungen gelangt. Auf diese Weise kann über eine einfache Drehbewegung zwischen einem Abblasen und einem Umblasen bzw. der Sperrposition umgeschaltet werden.

Die Brennkraftmaschine ist vorteilhaft mit einer Abgasrückführeinrichtung und/oder einer Abgasturbine mit variabler Turbinengeometrie zur veränderlichen Einstellung des wirksamen Turbineneintrittsquerschnittes ausgestattet.

Über die Abgasrückführeinrichtung ist in der befeuerten Antriebsbetriebsweise ein einstellbarer Abgasmassenstrom vom Abgasstrang in den Ansaugtrakt zu überführen, wodurch insbesondere auch im Volllastbetrieb eine Reduzierung der Abgasemissionen zu erreichen ist. Die variabel einstellbare Turbinengeometrie kann sowohl in der befeuerten Antriebsbetriebsweise als auch im Motorbremsbetrieb zur Steigerung der Antriebs- bzw. Bremsleistung vorteilhaft eingesetzt werden.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer aufgeladenen Brennkraftmaschine mit einer Abgasturbine mit zwei Abgasfluten, die jeweils mit einer Abgasleitung verbunden sind, wobei jede Abgasleitung von jeweils einer Zylinderreihe einer Brennkraftmaschine abzweigt, und mit einer Ventileinrichtung, über die ein Umblasen von Abgas zwischen den beiden Abgasfluten und/oder ein Abblasen in einen die Abgasturbine überbrückenden By-pass eingestellt werden kann,
- Fig. 2: eine Ventileinrichtung, über die ein Umblasen zwischen den Abgasleitungen und ein Abblasen unter Umgehung der Abgasturbine ermöglicht ist,
- Fig. 3: eine als Drehschieber ausgeführte Ventileinrichtung in einer schematisierten Darstellung, ausgeführt mit einer in den Ventilkörpermantel als Vertiefung eingebrachten Verbindungsausnehmung und zwei Kommunikationsöffnungen, die zwei Abströmöffnungen der beiden Abgasleitungen zugeordnet sind,
- Fig. 4: eine Darstellung gemäß Schnittlinie IV-IV aus Fig. 3,
- Fig. 5: ein Schaubild mit dem Verlauf des Öffnungsquerschnittes für das Umblasen zwischen den beiden Abgasleitungen sowie das Abblasen über den By-pass in Abhängigkeit vom Verstellwinkel des Drehschiebers.

In den Figuren sind gleiche Bauteile mit gleichen Bezugszeichen versehen.

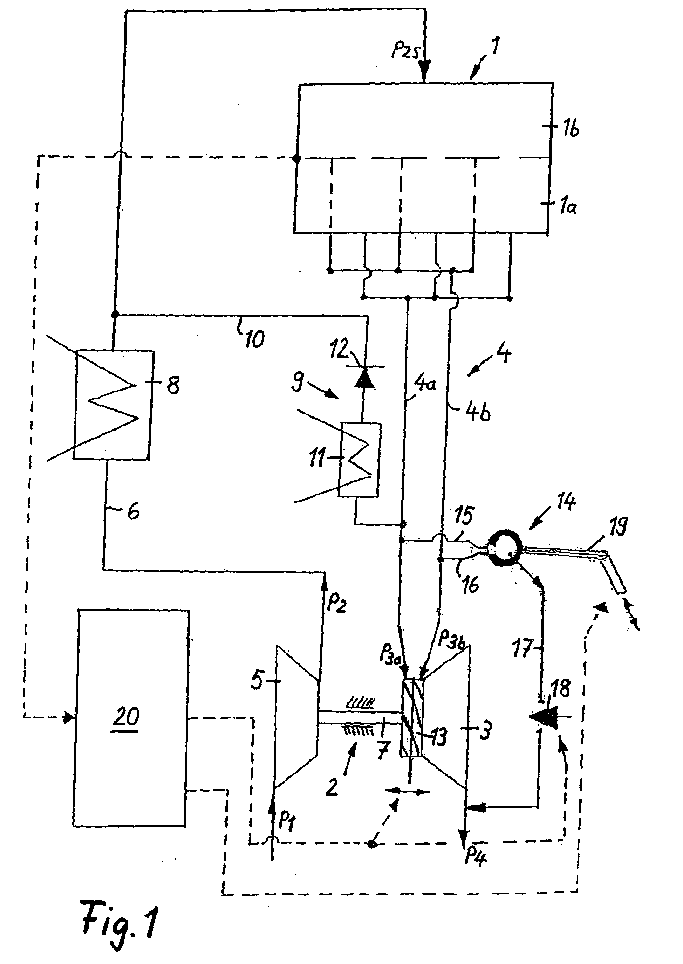

Bei der in Fig. 1 dargestellten Brennkraftmaschine 1 handelt es sich um einen Ottomotor oder einen Dieselmotor mit zwei Zylinderreihen 1a und 1b, deren Abgas über Abgasleitungen 4a und 4b eines Abgasstranges 4 abgeführt werden. Der Brennkraftmaschine 1 ist ein Abgasturbolader 2 zugeordnet, welcher eine Abgasturbine 3 im Abgasstrang 4 sowie einen Verdichter 5 im Ansaugtrakt 6 umfasst, wobei der Verdichter 5 über eine Welle 7 von der Abgasturbine 3 angetrieben wird. Im Betrieb der Brennkraftmaschine wird Umgebungsluft unter dem Umgebungsdruck p₁ vom Verdichter 5 angesaugt und auf einen erhöhten Druck p₂ verdichtet, unter dem die Verbrennungsluft einem Ladeluftkühler 8 zugeführt wird. Nach der Kühlung im Ladeluftkühler 8 wird die Verbrennungsluft als Ladeluft unter dem Ladedruck p₂ₛ den Zylindereinlässen der Brennkraftmaschine 1 zugeleitet. Die der Abgasturbine 3 über die beiden Abgasleitungen 4a und 4b zuzuführenden Abgase stehen stromauf der Abgasturbine unter dem Abgasgegendruck p₃ₐ bzw. p_{3b}. Nach dem Entspannen in der Abgasturbine 3 wird das Abgas unter dem entspannten Druck p₄ abgeleitet.

Die Brennkraftmaschine 1 ist mit einer Abgasrückführeinrichtung 9 ausgestattet, über die Abgase aus dem Abgasstrang 4 in den Ansaugtrakt 6 stromab des Ladeluftkühlers 8 überführt werden können. Die Abgasrückführeinrichtung 9 umfasst eine Rückführleitung 10, welche von der ersten Abgasleitung 4a abzweigt und in den Abgasstrang 6 einmündet. In der Rückführleitung 10 ist ein Abgaskühler 11 sowie ein nachgeordnetes Sperrventil 12 angeordnet. Das Sperrventil 12 verhindert ein Rückströmen von Abgas zurück in die Abgasleitung und ist zweckmäßig als passives Bauteil ausgeführt. Es kann gegebenenfalls aber auch zweckmäßig sein, das Sperrventil 12 einstellbar auszubilden, so dass dieses in Abhängigkeit von Zustands- und Betriebsgrößen der Brennkraftmaschine geöffnet und geschlossen werden kann. Ventil 12 kann auch ein Flatterventil sein.

Die Abgasturbine 3 ist mit einer variablen Turbinengeometrie 13 ausgestattet, über die der wirksame Turbineneintrittsquerschnitt zwischen einer minimalen Staustellung und einer maximalen Öffnungsstellung zu verstellen ist. Über die Einstellung der variablen Turbinengeometrie kann das Verhalten der Brennkraftmaschine sowohl in der befeuerten Antriebsbetriebsweise als auch im Motorbremsbetrieb beeinflusst werden.

Die Abgasturbine 3 ist zweiflutig aufgebaut und umfasst einen stromauf des Turbinenrades angeordneten Abgassammelraum, welcher insbesondere als Spiralkanal ausgebildet ist und zwei Abgasfluten umfasst. Jede Abgasflut ist mit jeweils einer Abgasleitung 4a bzw. 4b verbunden.

Über eine Ventileinrichtung 14 kann ein Druckausgleich zwischen den beiden Abgasleitungen 4a und 4b durchgeführt werden. Darüber hinaus kann mit Hilfe der Ventileinrichtung 14 der über einen Bypass 17 an der Abgasturbine 3 abzublasender Abgasmassenstrom reguliert werden. Die Ventileinrichtung 14 ist über zwei Verbindungsleitungen 15 und 16 mit den Abgasleitungen 4a und 4b gekoppelt. Von der Ventileinrichtung 14 zweigt der Bypass 17 ab, der stromab der Abgasturbine 3 wieder in den Abgasstrang mündet. Im Bypass 17 befindet sich ein einstellbares Bypassventil 18, welches ebenfalls der Ventileinrichtung 14 zugeordnet ist. Das Bypassventil 18 kann konstruktiv separat vom Gehäuse der Ventileinrichtung 14 ausgebildet sein oder auch in das Gehäuse der Ventileinrichtung integriert werden.

Die Ventileinrichtung 14 kann in Kombination mit dem By-passventil 18 in der Weise eingestellt werden, dass ausschließlich ein Umblasen zwischen den beiden Abgasleitungen 4a und 4b ermöglicht ist. Hierzu wird die Ventileinrichtung 14 durch Betätigung über ein Stellglied 19 in eine Öffnungsstellung gebracht und zugleich das Bypassventil 18 geschlossen, so dass lediglich ein Gasaustausch zwischen den Abgasleitungen 4a und 4b über die Verbindungsleitungen 15 und 16 und die Ventileinrichtung 14 ermöglicht ist, jedoch der Bypass 17 versperrt ist. In Schließposition der Ventileinrichtung 14 ist jeglicher Gasaustausch zwischen den Abgasleitungen 4a und 4b bzw. ein Abblasen über den Bypass 17 unterbunden. Werden dagegen sowohl die Ventileinrichtungen 14 als auch das Bypassventil 18 in Öffnungsstellung versetzt, erfolgt ein Abblasen von Abgas aus beiden Abgasleitungen 4a und 4b über den Bypass 17 in den Abgasstrang stromab der Abgasturbine 3.

Der Brennkraftmaschine 1 ist außerdem eine Regel- und Steuereinheit 20 zugeordnet, über die die einstellbaren Aggregate der Brennkraftmaschine in Abhängigkeit von Zustands- und Betriebsgrößen einzustellen sind. Dies betrifft insbesondere die variable Turbinengeometrie 13, die Ventileinrichtung 14 sowie das Bypassventil 18.

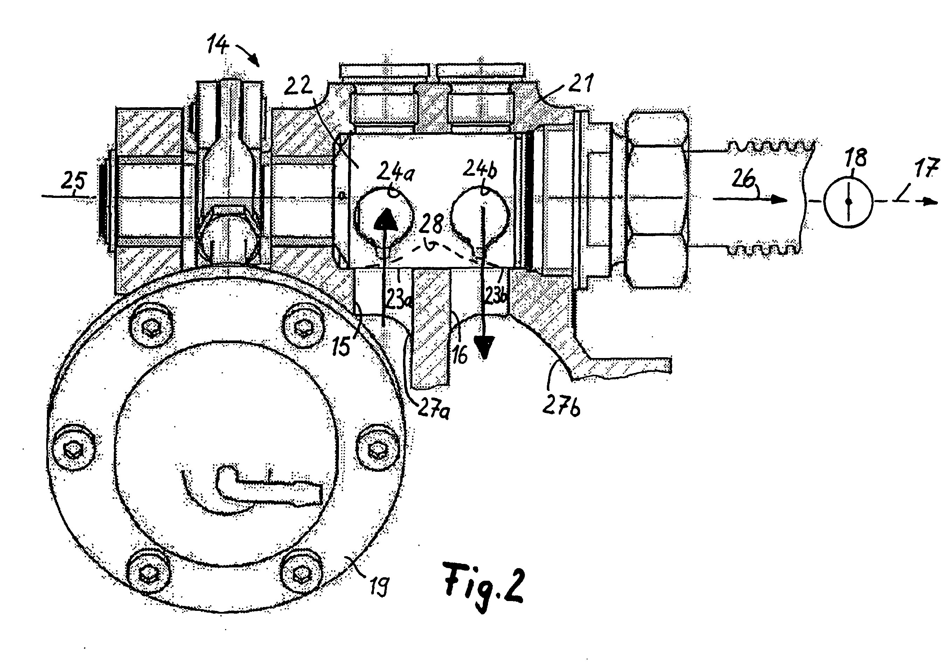

Die in Fig. 2 dargestellte Ventileinrichtung 14 ist als Drehschieber ausgeführt und umfasst einen in einem Ventilgehäuse 21 drehbar gelagerten, hohlzylindrischen Ventilkörper 22, in dessen Mantel zwei Kommunikationsöffnungen 24a und 24b eingebracht sind, die durch Rotation um die Ventilkörper-Längsachse 25 in eine Überdeckungsstellung mit zwei Abströmöffnungen 23a und 23b zu bringen sind, welche die Mündungsöffnungen der Verbindungsleitungen 15 und 16 im Ventilgehäuse 21 darstellen. Durch eine Drehung des Ventilkörpers 22 um seine Längsachse 25, erzeugt durch eine Betätigung des Stellgliedes 19, kann der Ventilkörper 22 zwischen einer Öffnungsposition, in welcher seine Kommunikationsöffnungen 24a und 24b in Überdeckung mit den Abströmöffnungen 23a und 23b stehen, und einer Schließposition verstellt werden, in welcher die Kommunikationsöffnungen nicht in Verbindung mit den Abströmöffnungen stehen und damit die Abströmöffnungen versperrt sind. In Öffnungsstellung dagegen ist eine Kommunikation über die Abströmöffnungen 23a und 23b und die Kommunikationsöffnungen 24a und 24b mit dem Ventilkörperinnenraum möglich.

Axial an den Ventilkörperinnenraum ist der Bypass 17 mit dem darin angeordneten Bypassventil 18 angeschlossen. Bei geöffnetem Bypassventil 18 kann der Gasinhalt des Ventilkörperinnenraums gemäß Pfeilrichtung 26 axial über den By-pass 17 abströmen. Bei geschlossenem Bypassventil 18 und zugleich in Öffnungsstellung versetzter Ventileinrichtung 14 ist dagegen ein axiales Abströmen über den Bypass 17 ausgeschlossen. In Öffnungsstellung der Ventileinrichtung 14 und bei geschlossenem Bypassventil 18 ist es jedoch möglich, dass gemäß den eingetragenen Pfeilen ein Gasaustausch zwischen den Verbindungsleitungen 15 und 16 und damit zwischen den beiden Abgasleitungen der Brennkraftmaschinen über die Abströmöffnungen 23a und 23b sowie die Kommunikationsöffnungen 24a und 24b und den Ventilkörperinnenraum stattfindet.

Die Ventileinrichtung 14 kann gegebenenfalls auch unmittelbar an der Eingangsseite der Abgasturbine angeordnet sein, insbesondere in der Weise, dass das Ventilgehäuse 21 unmittelbar mit dem Turbinengehäuse verbunden ist. Die Abströmöffnungen 23a und 23b bzw. die Verbindungsleitungen 15 und 16 zweigen in diesem Fall von den Abgasfluten 27a und 27b der Abgasturbine ab. Die beiden Abgasfluten 27a und 27b sind insbesondere unterschiedlich groß ausgeführt, was zu einem erhöhten Abgasgegendruck im Bereich der kleineren Abgasflut 27a und der dieser Abgasflut zugeordneten Abgasleitung führt. Wird der Ventilkörper 22 bei gesperrtem Bypass in Öffnungsstellung versetzt, führt dies zu einem Druckausgleich und einem gemäß den eingetragenen Pfeilen erfolgenden Umblasen von der kleineren Abgasflut 27a in die größere Abgasflut 27b bzw. den jeweils zugeordneten Abgasleitungen.

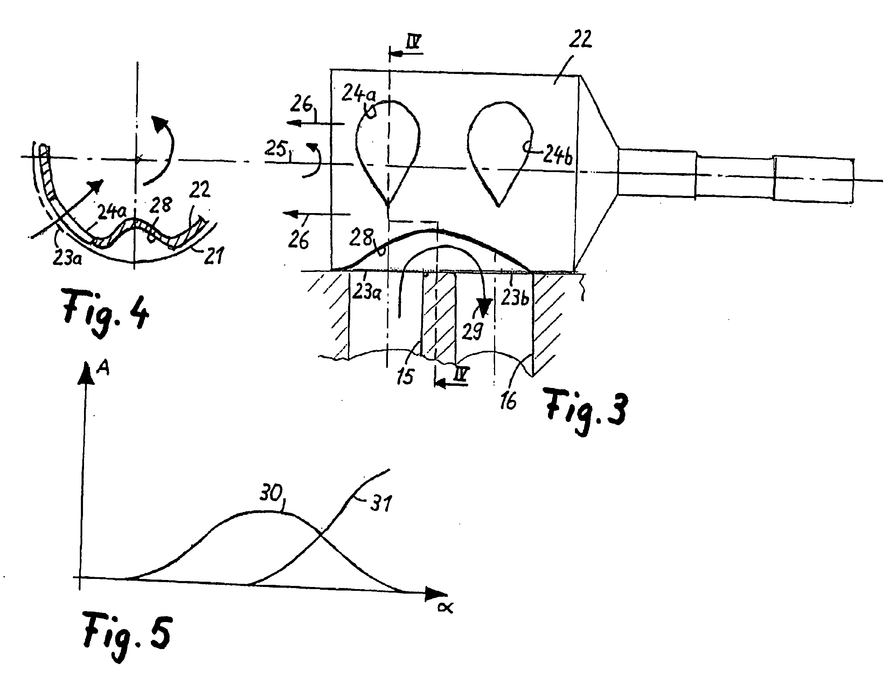

In den Fig. 3 und 4 ist ein Ventilkörper 22 einer Ventileinrichtung in einer modifizierten Ausführung dargestellt. In die Mantelfläche des Ventilkörpers 22 ist zusätzlich zu den beiden Kommunikationsöffnungen 24a und 24b eine Verbindungsausnehmung 28 eingebracht, die jedoch im Unterschied zu den Kommunikationsöffnungen die Wandung des hohlzylindrischen Ventilkörpers 22 nicht durchdringt und daher auch nicht mit dem Ventilkörperinnenraum kommuniziert. Die Verbindungsausnehmung 28 ist vielmehr in Form einer Verbindungswanne ähnlich einer Delle in die Mantelfläche eingebracht, derart, dass die Ausnehmung 28 gegenüber den übrigen Abschnitten der Mantelfläche radial zurückgesetzt ist. Die Verbindungsausnehmung 28 erstreckt sich soweit in Richtung der Längsachse an der Mantelfläche des Ventilkörpers 22, dass in einer Kommunikations- bzw. Öffnungsposition die beiden axial versetzt angeordneten Abströmöffnungen 23a und 23b über die Verbindungsausnehmung 28 kommunizieren, so dass in Pfeilrichtung 29 ein Gasaustausch zwischen den Verbindungsleitungen 15 und 16 stattfinden kann. In dieser ersten Öffnungsstellung des Ventilkörpers 22 ist die Verbindung zum Ventilkörperinnenraum und damit in Richtung des Bypasses unterbunden. Auf ein zusätzlich ausgeführtes Bypassventil kann daher verzichtet werden. Die Bypassventilfunktion ist somit in die Ventileinrichtung integriert, wobei das Sperren des Bypass entweder über die Sperrstellung des Ventilkörpers 22 oder über die erste Öffnungsstellung des Ventilkörpers (Verbindungsöffnung 28 in Überdeckung mit den Abströmöffnungen 23a und 23b) und das Öffnen des Bypass über die zweite Öffnungsstellung des Ventilkörpers (Kommunikationsöffnungen 24a und 24b in Überdeckung mit den Abströmöffnungen 23a und 23b) realisiert ist.

Die Verbindungsausnehmung 28 und die Kommunikationsöffnungen 24a und 24b befinden sich an unterschiedlichen Winkelpositionen am Umfang des Ventilkörpermantels, so dass bei einer Drehung des Ventilkörpers 22 um seine Längsachse 25 wahlweise in einer ersten Kommunikations- bzw. Öffnungsstellung die Verbindungsausnehmung 28 in Verbindung mit den Abströmöffnungen 23a und 23b tritt und in einer zweiten Öffnungsposition die beiden Kommunikationsöffnungen 24a und 24b in Überdeckung mit den Abströmöffnungen 23a und 23b liegen und das Abgas in den Bypass abgeführt werden kann. In allen übrigen Winkellagen des Ventilkörpers 22 verschließt die Mantelfläche des Ventilkörpers die Abströmöffnungen 23a und 23b; die Ventileinrichtung befindet sich somit in ihrer Schließposition.

Das in Fig. 5 gezeigte Schaubild stellt in Abhängigkeit der Winkellage α des Ventilkörpers der Ventileinrichtung den Verlauf des Umblasequerschnittes 30 und des Abblasequerschnittes 31 dar. Der Umblasequerschnitt 30 entspricht dem Überdeckungsgrad von der Verbindungsausnehmung 28 in der Mantelfläche des Ventilkörpers mit den beiden Abströmöffnungen 23a und 23b. Wird der Ventilkörper 22 aus seiner Schließposition in seine erste Öffnungsposition verdreht, in welcher die Verbindungsausnehmung 28 in Überdeckung mit den Abströmöffnungen 23a und 23b gelangt, steigt die Kurve 30 mit zunehmendem Überdeckungsgrad zu den Abströmöffnungen auf ein Maximum an. Im weiteren Verlauf sinkt die Kurve wieder ab. Etwa im Bereich des Maximums der Kurve 30 gelangen beispielsweise auch die Kommunikationsöffnungen 24a und 24b in Überdeckung mit den Abströmöffnungen 23a und 23b; dies ist durch den Anstieg der den Abblasequerschnitt kennzeichnenden Kurve 31 dargestellt.

## Patentansprüche

1. Brennkraftmaschine mit einem Abgasturbolader, der eine vom Abgas der Brennkraftmaschine (1) angetriebene Abgasturbine (3) im Abgasstrang (4) und einen von der Abgasturbine (3) angetriebenen Verdichter (5) im Ansaugtrakt (6) der Brennkraftmaschine (1) umfasst, wobei ein stromauf des Turbinenrades angeordneter Abgassammelraum in der,Abgasturbine (3) zwei Abgasfluten umfasst, die mit jeweils einer Abgasleitung (4a, 4b) des Abgasstranges (4) kommunizieren, mit einer Ventileinrichtung (14) stromauf der Abgasturbine, über die der Abgasmassenstrom zwischen den beiden Abgasleitungen (4a, 4b) umzublasen und/oder in einen Bypass (17) zur Abgasturbine (3) abzublasen ist, wobei die Ventileinrichtung (14) als Drehschieber ausgeführt ist und einen drehbar gelagerten, zwischen einer Öffnungsposition und einer Schließposition verstellbaren Ventilkörper (22) umfasst, in dessen Ventilkörpermantel mindestens eine Kommunikationsöffnung (24a, 24b) eingebracht ist,
**dadurch gekennzeichnet,**
**dass** der Ventilkörper (22) der Ventileinrichtung (14) hohlzylindrisch ausgebildet ist, dass in Öffnungsposition zwei Abströmöffnungen (23a, 23b) der beiden Abgasleitungen (4a, 4b) über die Kommunikationsöffnung (24a, 24b) mit dem Ventilkörperinnenraum verbunden sind, der mit dem Bypass (17) zur Abgasturbine (3) kommuniziert, dass der Bypass (17) über ein einstellbares Bypassventil (18) absperrbar ist und dass in den Ventilkörpermantel eine Verbindungsausnehmung (28) eingebracht ist, über die die beiden Abströmöffnungen (23a, 23b) zu verbinden sind, wobei die Verbindungsausnehmung (28) strömungsdicht vom Ventilkörperinnenraum getrennt ist.

2. Brennkraftmaschine nach Anspruch 1,
**dadurch** gekennezeichnet,
dass das Bypassventil in die Ventileinrichtung (14) integriert ist.

3. Brennkraftmaschine nach Anspruch 1 oder 2,
**dadurch gekennzeichnet,**
**dass** die Verbindungsausnehmung (28) und die Kommunikationsöffnung (24a, 24b) an unterschiedlichen Winkelpositionen des Ventilkörpers (22) angeordnet sind.

4. Brennkraftmaschine nach einem der Ansprüche 1 bis 3,
**dadurch gekennzeichnet,**
**dass** die Verbindungsausnehmung (28) als gegenüber der Mantelfläche zurückgesetzte Verbindungswanne am Ventilkörpermantel ausgebildet ist.

5. Brennkraftmaschine nach einem der Ansprüche 1 bis 4,
**dadurch gekennzeichnet,**
**dass** eine Abgasrückführeinrichtung (9) mit einer Rückführleitung (10) zwischen einer der beiden Abgasleitungen (4a, 4b) und dem Ansaugtrakt (6) vorgesehen ist.

6. Brennkraftmaschine nach einem der Ansprüche 1 bis 5,
**dadurch gekennzeichnet,**
**dass** die Abgasturbine (3) eine variable Turbinengeometrie (13) zur veränderlichen Einstellung des wirksamen Turbineneintrittsquerschnitts aufweist.

7. Brennkraftmaschine nach einem der Ansprüche 1 bis 6,
**gekennzeichnet durch**
zwei Zylinderreihen, deren Abgase über jeweils eine Abgasleitung (4a, 4b) abzuführen sind.

## Claims

1. Internal combustion engine having an exhaust gas turbocharger, which comprises an exhaust gas turbine (3), driven by the exhaust gas from the internal combustion engine (1), in the exhaust line (4) and a compressor (5), driven by the exhaust gas turbine (3), in the intake line (6) of the internal combustion engine (1), an exhaust gas collecting chamber arranged upstream of the turbine wheel in the exhaust gas turbine (3) comprising two exhaust gas flows, which each communicate with one exhaust pipe (4a, 4b) of the exhaust line (4), and having a valve device (14) upstream of the exhaust gas turbine, via which the exhaust gas mass flow can be blown between the two exhaust pipes (4a, 4b) and/or blown off into a bypass (17) to the exhaust gas turbine (3), the valve device (14) being embodied as a rotary slide valve and comprising a rotatably mounted valve body (22), adjustable between an open position and a closed position and let into the valve body outer casing of which is at least one communication opening (24a, 24b), **characterized in that** the valve body (22) of the valve device (14) is of hollow cylindrical design, that in the open position two outflow openings (23a, 23b) of the two exhaust pipes (4a, 4b) are connected via the communication opening (24a, 24b) to the valve body interior, which communicates with the bypass (17) to the exhaust gas turbine (3), and that the bypass (17) can be shut off by a regulable bypass valve (18) and that a connecting recess (28), which serves to connect the two outflow openings (23a, 23b), is let into the valve body outer casing, the connecting recess (28) being hermetically separated from the valve body interior.

2. Internal combustion engine according to Claim 1, **characterized in that** the bypass valve is integrated into the valve device (14).

3. Internal combustion engine according to Claim 1 or 2, **characterized in that** the connecting recess (28) and the communication opening (24a, 24b) are arranged at different angular positions of the valve body (22).

4. Internal combustion engine according to any one of Claims 1 to 3, **characterized in that** the connecting recess (28) takes the form of a connecting trough on the valve body outer casing set back in relation to the peripheral surface.

5. Internal combustion engine according to any one of Claims 1 to 4, **characterized in that** an exhaust gas recirculation device (9) having a return pipe (10) is provided between one of the two exhaust pipes (4a, 4b) and the intake line (6).

6. Internal combustion engine according to any one of Claims 1 to 5, **characterized in that** the exhaust gas turbine (3) has a variable turbine geometry (13) for variable regulation of the effective turbine inlet cross-section.

7. Internal combustion engine according to any one of Claims 1 to 6, **characterized by** two cylinder banks, the exhaust gases from each of which are led off via an exhaust pipe (4a, 4b).

## Revendications

1. Moteur à combustion interne comprenant un turbocompresseur à gaz d'échappement qui comprend une turbine à gaz d'échappement (3), entraînée par les gaz d'échappement du moteur à combustion interne (1), dans le circuit des gaz d'échappement (4) et un compresseur (5), entraîné par la turbine à gaz d'échappement (3), dans le circuit d'aspiration (6) du moteur à combustion interne (1), dans lequel une chambre de collecte de gaz d'échappement, agencée en amont du rotor de turbine, comprend deux flux de gaz d'échappement dans la turbine à gaz d'échappement (3), lesquels communiquent chacun avec une conduite à gaz d'échappement (4a, 4b) du circuit de gaz d'échappement (4), comprenant un agencement de valve (14) en amont de la turbine à gaz échappement, via lequel l'écoulement massique de gaz d'échappement peut être inversé entre les deux conduites à gaz d'échappement (4a, 4b) et/ou peut être évacué dans un by-pass (17) vers la turbine à gaz d'échappement (3), ledit agencement de valve (14) étant réalisé sous forme de tiroir rotatif et comprend un corps de valve (22) monté en rotation est susceptible d'être déplacé entre une position ouverte et une position fermée, avec au moins une ouverture de communication (24a, 24b) ménagée dans l'enveloppe dudit corps de valve,
**caractérisé en ce que**
le corps de valve (22) de l'agencement de valve (14) est réalisé cylindrique creux, **en ce que** dans la position ouverte, deux ouvertures d'évacuation (23a, 23b) des deux conduites à gaz d'échappement (4a, 4b) sont reliées à l'espace intérieur du corps de valve via l'ouverture de communication (24a, 24b), ledit espace communiquant avec le by-pass (17) vers la turbine à gaz d'échappement (3), **en ce que** le by-pass (17) peut être fermé via une valve de by-pass (18) réglable et **en ce qu'**un évidement de liaison (28) est ménagé dans l'enveloppe du corps de valve, évidement via lequel les deux ouvertures d'évacuation (23a, 23b) peuvent être reliées, ledit évidement de liaison (28) étant séparé de façon étanche vis-à-vis de l'écoulement par rapport à l'espace intérieur du corps de valve.

2. Moteur à combustion interne selon la revendication 1, **caractérisé en ce que** la valve de by-pass est intégrée dans l'agencement de valve (14).

3. Moteur à combustion interne selon la revendication 1 au 2, **caractérisé en ce que** l'évidement de liaison (28) et l'ouverture de communication (24a, 24b) sont agencés à des positions angulaires différentes du corps de valve (22).

4. Moteur à combustion interne selon l'une des revendications 1 à 3, **caractérisé en ce que** l'évidement de liaison (28) est réalisé sous la forme d'une la cuvette de liaison, en retrait par rapport à la surface enveloppe, sur l'enveloppe du corps de valve.

5. Moteur à combustion interne selon l'une des revendications 1 à 4, **caractérisé en ce qu'**il est prévu un système de recyclage de gaz d'échappement (9) avec une conduite de recyclage (10) entre l'une des deux conduites de gaz d'échappement (4a, 4b) et le circuit d'aspiration (6).

6. Moteur à combustion interne selon l'une des revendications 1 à 5, **caractérisé en ce que** la turbine à gaz d'échappement (3) présente une géométrie de turbine (13) variable pour régler de façon modifiable la section transversale efficace à l'entrée de la turbine.

7. Moteur à combustion interne selon l'une des revendications 1 à 6, **caractérisé par** deux rangées de cylindres, dont les gaz d'échappement sont évacués par l'une des conduites de gaz d'échappement (4a, 4b) respectives.
